# EUROPÄISCHE PATENTANMELDUNG

(11) **EP 2 543 865 A2**
(43) Veröffentlichungstag der Anmeldung: **09.01.2013**
(21) Anmeldenummer: 12004975.4
(22) Anmeldetag: 05.07.2012
(51) Int. Cl.: F02K 3/06

(54) **Turbofan-Triebwerk mit Wärmetauscher im Kerntriebwerksgehäuse**

(30) Priorität: 08.07.2011 DE 102011106965
(71) Anmelder: Rolls-Royce Deutschland & Co. KG, 158257 Blankenfelde-Mahlow (DE)
(72) Erfinder: Todorovic, Predrag, 10437 Berlin (DE)
(74) Vertreter: Hoefer & Partner

(57) **Zusammenfassung**

Die Erfindung bezieht sich auf ein Fluggasturbinentriebwerk mit einem Kerntriebwerk 10, welches von einem Nebenstromkanal 29 umgeben ist, wobei im Bereich einer radial inneren Wandung 21 des Nebenstromkanals 29 stromab von Leitschaufeln 31 des Nebenstromkanals 29 ein im Wesentlichen ringförmiges Kühlerelement 30 angeordnet ist.

## Beschreibung

Die Erfindung bezieht sich auf ein Fluggasturbinentriebwerk mit einem Kerntriebwerk, welches von einem Nebenstromkanal umgeben ist. In dem Nebenstromkanal sind Leitschaufeln angeordnet, welche stromab eines Fans die Strömung in dem Nebenstromkanal lenken.

Aus dem Stand der Technik ist es bekannt, stromab der Leitschaufeln des Nebenstromkanals Kühlerelemente, Wärmetauscher oder Ölkühler anzuordnen. Hieraus ergibt sich der Nachteil, dass dieser Bereich der inneren Struktur, welcher einen Teil des Gehäuses des Kerntriebwerks bildet, zu Servicezwecken nicht entfernt werden kann, da dort die Kühlerelemente angeordnet sind. Weiterhin sind in diesem Bereich des Kerntriebwerksgehäuses Lufteinlässe vorgesehen um Luft aus dem Nebenstromkanal in den inneren Bereich des Kerntriebwerks einzubringen und dort zu Kühlzwecken zu verwenden, beispielsweise zum Kühlen der Turbinenschaufeln. Aus all dem ergibt sich, dass die aus dem Stand der Technik bekannten Lösungen einen relativ großen Einbauraum erfordern und zusätzlich die Zugänglichkeit zu Komponenten des Kerntriebwerks, beispielsweise Pumpen, Generatoren, Lagern oder Ähnlichem erschweren. Weiterhin ergibt sich der Nachteil, dass die bekannten Strukturen eine Vielzahl von Bauelementen erfordern und ein hohes Gewicht aufweisen. Auch die Herstell- und Montagekosten sind nicht unerheblich.

Der Erfindung liegt die Aufgabe zugrunde, ein Fluggasturbinentriebwerk zu schaffen, bei welchem unter Vermeidung der Nachteile des Standes der Technik eine effektive Kühlung mittels Wärmetauschern ermöglicht wird.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass im Bereich einer radial inneren Wandung des Nebenstromkanals stromab von Leitschaufeln des Nebenstromkanals ein im wesentlichen ringförmiges Kühlerelement angeordnet ist.

Erfindungsgemäß werden die Begriffe Ölkühler, Wärmetauscher und Kühlerelement gleichbedeutend verwendet. In jedem Falle ist das Kühlerelement dazu vorgesehen, Öl aus dem Ölkreislauf des Fluggasturbinentriebwerks zu kühlen.

Die erfindungsgemäße Lösung schafft somit die Möglichkeit, auf einer begrenzten axialen Länge bei vermindertem axialem Einbauraum ein Kühlerelement anzuordnen, welches einen hohen Wirkungsgrad aufweist. Da das Kühlerelement erfindungsgemäß direkt stromab der Leitschaufelanordnung angeordnet ist, ist die Montage des erfindungsgemäßen Kühlerelementes einfach und kostengünstig realisierbar.

Als besonders vorteilhaft erweist es sich, wenn das Kühlerelement, welches insgesamt ringförmig ist, aus einzelnen Segmenten zusammengesetzt ist. Dies können beispielsweise Halb-Segmente sein, so dass zwei derartige Halb-Segmente zu einem ringförmigen Kühlerelement, welches sich um den gesamten Umfang erstreckt, zusammengefügt werden können.

Das erfindungsgemäße Kühlerelement ist in bevorzugter Ausbildung der Erfindung stromab direkt an den Leitschaufelkranz bzw. an die Fußkonstruktion des Leitschaufelkranzes angeflanscht und wird somit von diesem gehalten. Weitere Lagerungselemente können somit entfallen.

In besonders günstiger Ausgestaltung der Erfindung ist das Kühlerelement als Oberflächenkühler ausgebildet. Somit umfasst es eine Vielzahl von in Strömungsrichtung angeordneten Rippen, welche die Oberfläche des Kühlerelemente erheblich vergrößern und somit den Wirkungsgrad verbessern, so dass die axiale Gesamtlänge des Kühlerelemente klein gehalten werden kann.

In weiterer, günstiger Ausgestaltung der Erfindung ist vorgesehen, dass die Leitschaufeln in dem Nebenstromkanal zur Wärmeübertragung mit dem Kühlerelement verbunden sind. Somit kann ein Teil der Wärme des Kühlerelementes durch Wärmeleitung auf die Leitschaufeln übertragen werden, so dass diese zusätzlich zur Kühlung beitragen.

Das Kühlerelement ist erfindungsgemäß bevorzugterweise mit einer Vielzahl von Kühlkanälen versehen, welche sich in Umfangsrichtung erstrecken. Das Kühlerelement wird somit in Umfangsrichtung durchströmt. Hierdurch kann eine wirksame Durchströmung mit dem abzukühlenden Medium, beispielsweise Öl, erzielt werden.

Zur kostengünstigen und einfachen Herstellung des erfindungsgemäßen Kühlerelementes kann es vorteilhaft sein, wenn dieses als Strangpressprofil hergestellt und nachfolgend oder während der Extrusion in die ringförmige Form gebogen wird. Bei einem derartigen Strangpressprofil ist es dann möglich, Lagerstellen auszubilden, um das Kühlerelement an die Tragkonstruktion der Leitschaufeln (Leitschaufelring) anflanschen zu können. Die Kühlrippen an der radial äußeren Seite des Strangpressprofils können nachfolgend mittels eines Schnellfräs-, Fräs- oder Schleifvorganges erzeugt werden.

Das erfindungsgemäße Kühlerelement ist somit in die Tragkonstruktion des Leitschaufelrings und/oder in die Oberfläche des Kerntriebwerksgehäuses integriert.

Ein weiterer Vorteil der erfindungsgemäßen Lösung besteht darin, dass die auf das Kühlerelement wirkenden Kräfte minimiert werden können, so dass das Kühlerelement klein dimensioniert werden kann ohne dass die Gefahr besteht, dass dieses durch die auftretenden Kräfte während des Betriebs beschädigt wird.

Ein weiterer Vorteil der erfindungsgemäßen Lösung besteht darin, dass die zum Anschluss der Fluidleitungen an das Kühlerelement benötigten Installationen kurz und effektiv ausgebildet sein können.

Im Folgenden wird die Erfindung anhand eines Ausführungsbeispiels in Verbindung mit den Zeichnungen beschrieben. Dabei zeigt:
- Fig. 1: eine schematische Darstellung eines Gasturbinentriebwerks gemäß der vorliegenden Erfindung,
- Fig. 2: eine teil-perspektivische Ansicht des erfindungsgemäßen Kühlerelements,
- Fig. 3: eine perspektivische Ansicht des in Fig. 2 gezeigten Kühlerelements,
- Fig. 4: eine perspektivische Teilansicht des erfindungsgemäßen Kühlerelements,
- Fig. 5: eine stirnseitige Ansicht, in Axialrichtung, des erfindungsgemäßen Kühlerelements, und
- Fig. 6: eine Ansicht, analog Fig. 4, des Ausgangsmaterials für das erfindungsgemäße Kühlerelement.

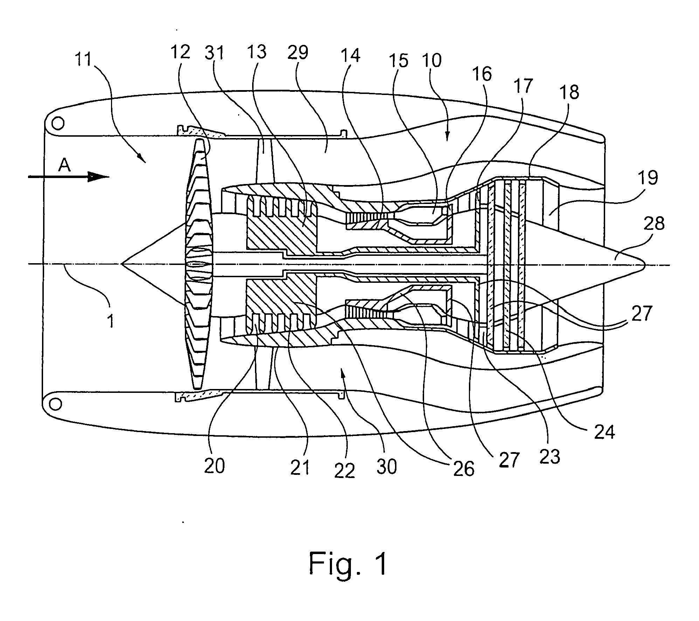

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufein 22 auf, die radial nach außen von einer drehbaren Trommel oder Scheibe 26 vorstehen, die mit Naben 27 der. Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

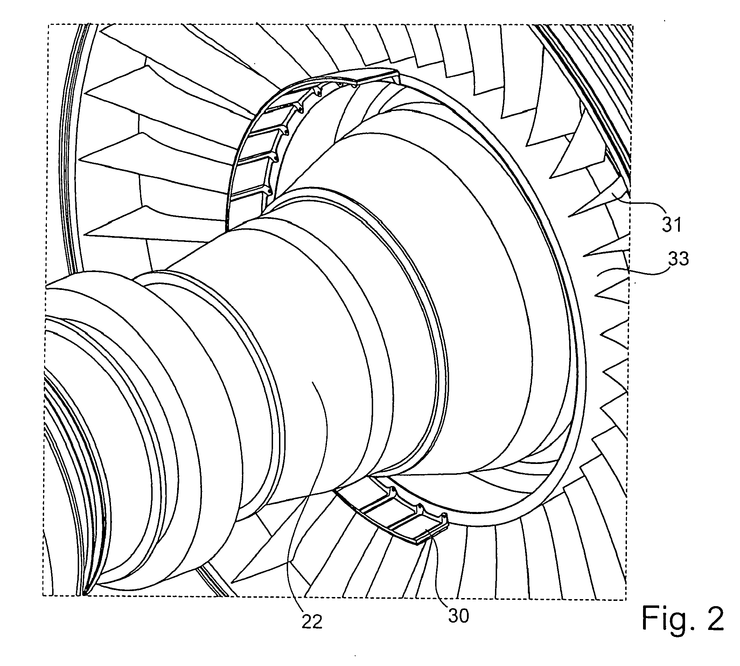

Die Fig. 2 zeigt in perspektivischer Teilansicht eine vereinfachte Darstellung einer Verdichtertrommel 31 des Kerntriebwerks 10. Weiterhin sind Leitschaufeln 31 (OGVs) des Nebenstromkanals 29 dargestellt. Bezugszeichen 33 zeigt in vereinfachter Darstellung einen Trägerring 33, der beispielsweise Schaufelfüße (nicht dargestellt) der Leitschaufeln 31 umfassen kann. Weiterhin zeigt die Fig. 2 ein erfindungsgemäßes Kühlerelement 30, welches zur deutlicheren Darstellung als Halb-Ring dargestellt ist und nachfolgend im Einzelnen beschrieben werden wird.

Das Kühlerelement 30 ist direkt mit dem Trägerring 33 verbunden (verschraubt).

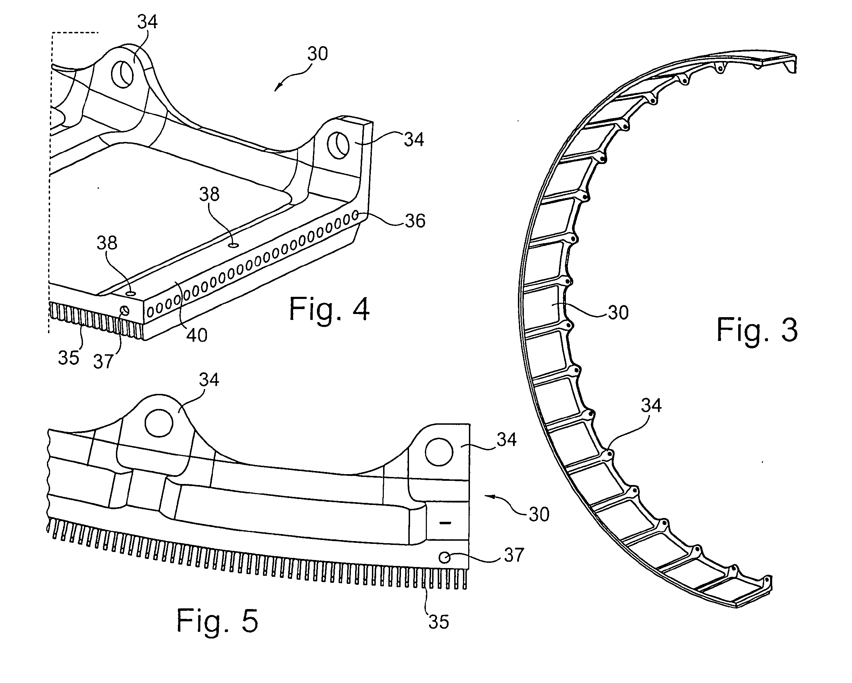

Die Fig. 3 zeigt eine perspektivische Ansicht des in Fig. 2 gezeigten Kühlerelements, ebenfalls in Halbkreisausgestaltung. Dabei sind insbesondere eine Vielzahl von Lageransätzen 34 ersichtlich, mit welchen das Kühlerelement 30 befestigt wird.

Die Fig. 4 und 5 zeigen in vergrößerter Darstellung das Kühlerelement 30. Dieses ist insgesamt als geschlossener Ring ausgebildet und besteht bevorzugterweise aus einzelnen Sektoren, beispielsweise zwei Sektoren, welche sich jeweils um 180° des Umfanges erstrecken. Es ist erfindungsgemäß jedoch auch möglich, das Kühlerelement 30 in mehrere Sektoren zu unterteilen, so dass einzelne Teilelemente des Kühlerelements 30 gebildet werden.

Wie sich aus den Fig. 4 und 5 ergibt, ist das Kühlerelement als Oberflächenkühler ausgebildet und umfasst eine Vielzahl von Kühlrippen 35, welche sich in Axialrichtung, bezogen auf die Triebwerksachse 1, erstrecken. Im Inneren des Kühlerelements sind eine Vielzahl von in Umfangsrichtung verlaufenden, zueinander parallelen Kühlkanälen 36 ausgebildet, durch welche das zu kühlende Medium (bevorzugt Öl) strömt. Stirnseitig sind die Kühlkanäle 36 an dem Endbereich des Kühlerelements 30 durch Blindstopfen, Schrauben oder Ähnliches oder durch Verschweißen verschlossen. Die Kühlkanäle können beliebige Querschnitte aufweisen, beispielsweise rund, oval, eckig oder geschlungen. Durch Querbohrungen 37 kann eine Quer-Verbindung der einzelnen Kühlkanäle 36 vorgenommen werden. Die Querbohrung 37 kommuniziert mit zumindest einer Anschlussbohrung 38, welche mit einem Fitting oder Anschlusselement zur Zuführung oder Ableitung des zu kühlenden Fluids angeschlossen werden kann.

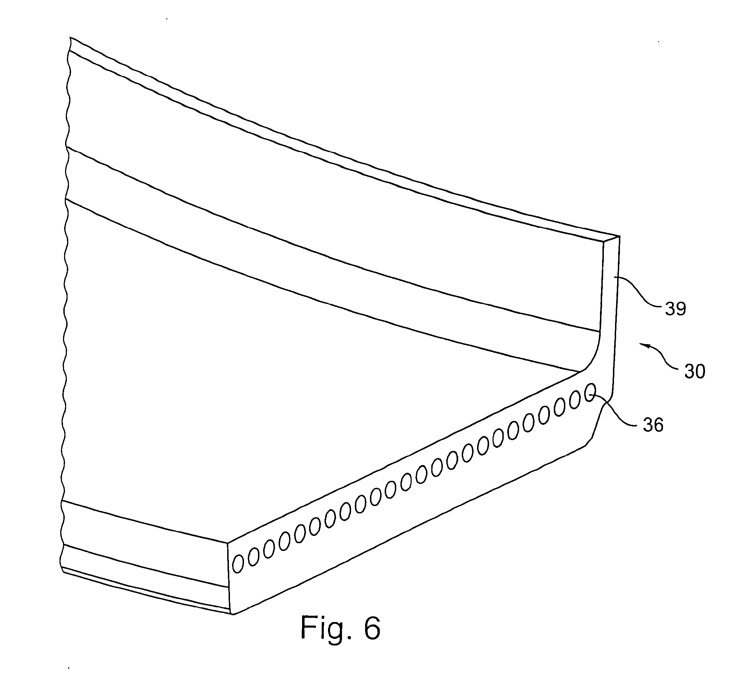

Die Fig. 6 zeigt ein stranggepresstes Ausgangsmaterial für ein Kühlerelement 30. Dieses kann entweder kreisförmig stranggepresst werden oder es wird nach dem Strangpressen entsprechend gebogen. Aus Fig. 6 ist ersichtlich, dass das Ausgangsmaterial anschließend bearbeitet wird, um die Kühlrippen 35 zu erzeugen. Weiterhin weist das Ausgangsmaterial einen Anschlusssteg 39 auf, welcher nachfolgend mechanisch bearbeitet wird, um die einzelnen Lageransätze 34 auszubilden. Das nicht benötigte Material wird zur Gewichtsersparnis entfernt. Weiterhin bleibt ein verdickter Bereich 40 (siehe Fig. 4) stehen, um die Querbohrung 37 sowie die Anschlussbohrungen 38 einbringen zu können. Der dazwischen liegende Bereich des Ausgangsmaterials wird durch mechanische Bearbeitung ebenfalls entfernt, um eine Gewichtsreduzierung zu erzielen.

### Bezugszeichenliste:

- 1: Triebwerksachse
- 10: Gasturbinentriebwerk / Kerntriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse / Wandung
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Nebenstromkanal
- 30: Kühlerelement
- 31: Leitschaufel des Nebenstromkanals / Leitschaufelring
- 32: Verdichtertrommel
- 33: Trägerring
- 34: Lageransatz
- 35: Kühlrippen
- 36: Kühlkanal
- 37: Querbohrung
- 38: Anschlussbohrung
- 39: Anschlusssteg
- 40: verdickter Bereich

## Patentansprüche

1. Fluggasturbinentriebwerk mit einem Kerntriebwerk (10), welches von einem Nebenstromkanal (29) umgeben ist, wobei im Bereich einer radial inneren Wandung (21) des Nebenstromkanals (29) stromab von Leitschaufeln (31) des Nebenstromkanals (29) ein im Wesentlichen ringförmiges Kühlerelement (30) angeordnet ist.

2. Fluggasturbinentriebwerk nach Anspruch 1, **dadurch gekennzeichnet, dass** das Kühlerelement (30) als Oberflächenkühler ausgebildet ist.

3. Fluggasturbinentriebwerk nach Anspruch 1 oder 2, **dadurch gekennzeichnet, dass** das Kühlerelement (30) stromab von einem hinteren Bereich eines radial innen liegenden Flansches eines Leitschaufelrings (31) angeordnet ist.

4. Fluggasturbinentriebwerk nach Anspruch 3, **dadurch gekennzeichnet, dass** die Leitschaufeln (31) zur Wärmeübertragung mit dem Kühlerelement (30) verbunden sind.

5. Fluggasturbinentriebwerk nach einem der Ansprüche 1 bis 4, **dadurch gekennzeichnet, dass** das Kühlerelement (30) mit in Umfangsrichtung verlaufenden Kühlkanälen (36) versehen ist.

6. Fluggasturbinentriebwerk nach einem der Ansprüche 1 bis 5, **dadurch gekennzeichnet, dass** das Kühlerelement (30) als gebogenes Strangpressprofil ausgebildet ist.

7. Fluggasturbinentriebwerk nach einem der Ansprüche 1 bis 6, **dadurch gekennzeichnet, dass** das Kühlerelement (30) an seiner radial äußeren Seite mit Kühlrippen (35) versehen ist.
